(19) Europäisches Patentamt
European Patent Office
Office européen des brevets

(11) Veröffentlichungsnummer: **0 556 740 B1**

(12) **EUROPÄISCHE PATENTSCHRIFT**

(45) Veröffentlichungstag der Patentschrift: **03.05.95**

(51) Int. Cl.[6]: **C08L 83/08**, C08K 5/06

(21) Anmeldenummer: **93102231.3**

(22) Anmeldetag: **12.02.93**

Die Akte enthält technische Angaben, die nach dem Eingang der Anmeldung eingereicht wurden und die nicht in dieser Patentschrift enthalten sind.

# (54) Organopolysiloxanzusammensetzung.

(30) Priorität: **13.02.92 DE 4204306**

(43) Veröffentlichungstag der Anmeldung:
**25.08.93 Patentblatt 93/34**

(45) Bekanntmachung des Hinweises auf die Patenterteilung:
**03.05.95 Patentblatt 95/18**

(84) Benannte Vertragsstaaten:
**AT BE CH DE ES FR GB IT LI NL SE**

(56) Entgegenhaltungen:
**EP-A- 0 186 265**
**DE-A- 3 100 030**
**DE-A- 3 447 636**

(73) Patentinhaber: **WACKER-CHEMIE GMBH**
**Hanns-Seidel-Platz 4**
**D-81737 München (DE)**

(72) Erfinder: **Sejpka, Johann, Dr.**
**Tannenweg 2**
**W-8261 Marktl (DE)**
Erfinder: **Gerhardinger, Dieter**
**In den Grüben 125**
**W-8263 Burghausen (DE)**
Erfinder: **Wimmer, Franz**
**Asternweg 1**
**W-8263 Burghausen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 556 740 B1

## Beschreibung

Die Erfindung betrifft wasserverdünnbare Organopolysiloxanzusammensetzungen, Verfahren zu deren Herstellung sowie deren Verwendung als Imprägniermittel.

In GB-PS 1,199,501 (Boeing Co.) werden Hydrophobierungsmittel, insbesondere für Glasoberflächen, welche Isopropanol, Wasser und ein Umsetzungsprodukt eines hydroxyterminierten, basischen Stickstoff aufweisenden Organopolysiloxans mit organischen und anorganischen Säuren enthalten, beschrieben. In US-PS 3,355,424 (Dow Corning Corp.) wird die Herstellung von polyaminoalkylsubstituierten Organopolysiloxanen sowie deren Umsetzung mit Säuren zu den entsprechenden Salzen und deren Anwendung als Textilhydrophobierung beschrieben. Des weiteren wird in DE-AS 1 271 865 die Verwendung speziell modifizierter Aminosiloxane bzw. deren Salze als Schutzüberzug von Gegenständen gegen Eisbildung offenbart. In EP-OS 186 265 A (Dow Corning Ltd.; ausgegeben am 2. Juli 1986) sowie EP-OS 68 671 A (Dow Corning Ltd.; ausgegeben am 5. Januar 1983) werden Zusammensetzungen beschrieben, die (1) eine Mischung und/oder Reaktionsprodukt eines (A) Salzes eines Organopolysiloxans mit mindestens einer Aminogruppe sowie mindestens einer reaktiven Gruppe -OX, wobei X Wasserstoffatom, Alkylrest oder Alkoxyalkylrest bedeutet, mit einer (B) in (2) löslichen, mindestens zwei reaktive Gruppen -OX aufweisenden Organosiliciumverbindung und (2) ein wasserlösliches Lösungsmittel enthalten. Darüberhinaus werden in DE 34 47 636 A (Wacker-Chemie GmbH; ausgegeben am 3. Juli 1986) bzw. der entsprechenden US 4,661,551 A (ausgegeben am 28. April 1987) Zusammensetzungen offenbart, die (A) Salz einer wasserlöslichen organischen oder anorganischen Säure und Aminosiloxan, gegebenenfalls (B) Aminosiloxan sowie gegebenenfalls wasserunlösliches und von Halogenatomen freies organisches Lösungsmittel enthalten, wobei diese Zusammensetzungen im wesentlichen frei von wasserlöslichen Lösungsmitteln oder Oktanolen sind. Diese Zusammensetzungen bzw. deren Verdünnungen mit Wasser werden als Imprägniermittel, insbesondere als Hydrophobiermittel, verwendet, wobei die wäßrigen Verdünnungen keine ausreichende Wirkstoffstabilität zeigen.

EP-A 186265 beschreibt eine Zusammensetzung, die aus einem Reaktionsprodukt zwischen einem Polydiorganosiloxan, welches mindestens einen Substituenten enthält, der an ein Siliciumatom gebunden ist und ein Stickstoffatom enthält und einem Silan, das in einem Glykolether löslich ist, besteht.

Gegenstand der Erfindung sind Organopolysiloxanzusammensetzungen, die

(A) ein Salz aus einer wasserlöslichen organischen oder anorganischen Säure und einem Organopolysiloxan, welches mindestens einen SiC-gebundenen organischen Rest mit basischem Stickstoff aufweist,

(B) einen alkoxylierten Alkohol, gegebenenfalls

(C) ein Salz aus einer wasserunlöslichen organischen Säure und ein Organopolysiloxan, welches mindestens einen SiC-gebundenen organischen Rest mit basischem Stickstoff aufweist,

enthalten, wobei kein Silan oder Siloxan, das Silanolgruppen oder an Silicium gebundene hydrolysierbare Gruppen aufweist und in Glykolethern der Formel $C_4H_9\text{-O-}(CH_2\text{-}CH_2\text{-O})_n\text{-H}$, wobei n 1 oder 2 ist, löslich ist, enthalten ist.

Die Organopolysiloxane, welche mindestens einen SiC-gebundenen organischen Rest mit basischem Stickstoff aufweisen, sind vorzugsweise solche aus Einheiten der allgemeinen Formel

$$R_aY_bSi(OR^1)_cO_{\frac{4-a-b-c}{2}} \qquad (I),$$

worin

- R gleich oder verschieden sein kann und Wasserstoffatom oder einen einwertigen, von basischem Stickstoff freien organischen Rest bedeutet,
- $R^1$ gleich oder verschieden sein kann und Wasserstoffatom, einen Alkylrest oder einen Alkoxyalkylrest bedeutet,
- Y gleich oder verschieden sein kann und einen einwertigen, SiC-gebundenen Rest mit basischem Stickstoff bedeutet,
- a 0, 1, 2 oder 3,
- b 0, 1 oder 2 und
- c 0, 1 oder 2 ist,

mit der Maßgabe, daß die Summe aus a, b und c in den Einheiten der Formel (I) kleiner oder gleich 3 ist und pro Molekül mindestens ein Rest Y anwesend ist.

Bei Rest R handelt es sich vorzugsweise um Kohlenwasserstoffreste mit 1 bis 18 Kohlenstoffatome(en), wobei der Methylrest, Ethylrest, n-Propylrest, Iso-Propylrest und n-Butylrest besonders bevorzugt sind, insbesondere der Methylrest.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Bei Rest $R^1$ handelt es sich vorzugsweise um Alkylreste mit 1 bis 4 Kohlenstoffatom(en), wobei der Methyl- und Ethylrest besonders bevorzugt sind.

Die obengenannten Beispiele für Alkylreste R gelten in vollem Umfang auch für den Rest $R^1$.

Vorzugsweise sind die Reste Y solche der Formel

$R^2{}_2NR^3$-     (II)

worin $R^2$ gleich oder verschieden sein kann und Wasserstoff, Alkyl-, Cycloalkyl- oder Aminoalkylreste bedeutet und $R^3$ zweiwertige Kohlenwasserstoffreste bedeutet.

Die Beispiele für Alkyl- und Cycloalkylreste R gelten im vollen Umfang auch für Alkyl- bzw. Cycloalkylreste $R^2$.

Vorzugsweise ist an jedes Stickstoffatom in den Resten der Formel (II) mindestens ein Wasserstoffatom gebunden.

Beispiele für Rest $R^3$ sind der Methylen-, Ethylen-, Propylen-, Butylen-, Cyclohexylen-, Octadecylen-, Phenylen- und Butenylenrest, wobei, insbesondere wegen der leichten Zugänglichkeit, der n-Propylenrest bevorzugt ist.

Beispiele für Reste Y sind
$H_2N(CH_2)_3$-,
$H_2N(CH_2)_2NH(CH_2)_3$-,
$H_2N(CH_2)_2$-,
$H_3CNH(CH_2)_3$-,
$H_2N(CH_2)_4$-,
$H_2N(CH_2)_5$-,
$H(NHCH_2CH_2)_3$-,
$C_4H_9NH(CH_2)_2NH(CH_2)_2$- und
cyclo-$C_6H_{11}NH(CH_2)_3$-,
wobei $H_2N(CH_2)_2NH(CH_2)_3$- besonders bevorzugt ist.

Der durchschnittliche Wert von a liegt vorzugsweise zwischen 1,66 und 1,99, besonders bevorzugt zwischen 1,40 und 1,96.

Der durchschnittliche Wert von b liegt vorzugsweise zwischen 0,01 und 0,25, besonders bevorzugt zwischen 0,03 und 0,17.

Der durchschnittliche Wert von c liegt vorzugsweise zwischen 0 und 0,63, besonders bevorzugt zwischen 0 und 0,45.

Die Organopolysiloxane aus Einheiten der allgemeinen Formel (I) haben bei 25 °C vorzugsweise eine Viskosität von 5 bis 5000 cSt (5 bis 5000 $mm^2/s$), besonders bevorzugt 10 bis 100 cSt (10 bis 100 $mm^2/s$).

Die Organopolysiloxane aus Einheiten der Formel (I) weisen basischen Stickstoff in Mengen von vorzugsweise 0,1 bis 4,2 Gewichtsprozent, besonders bevorzugt von 0,7 bis 2,8 Gewichtsprozent, insbesondere von 1,0 bis 2,1 Gewichtsprozent, jeweils bezogen aus das Gesamtgewicht des Organopolysiloxans, auf. Der Begriff "basischer Stickstoff" bezieht sich dabei auf Stickstoff, berechnet als Element.

Bei den Organopolysiloxanen aus Einheiten der Formel (I) handelt es sich besonders bevorzugt um im wesentlichen lineare Organopolysiloxane mit einem Verhältnis von Diorganosiloxyeinheiten mit von basischem Stickstoff freien, SiC-gebundenen Resten zu Diorganosiloxyeinheiten mit SiC-gebundenen Resten mit basischem Stickstoff von vorzugsweise 300 : 1 bis 5 : 1, besonders bevorzugt 50 : 1 bis 10 : 1, insbesondere von 40 : 1 bis 15 : 1.

Beispiele für Organopolysiloxane aus Einheiten der Formel (I) sind

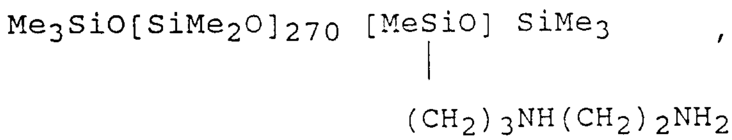

,

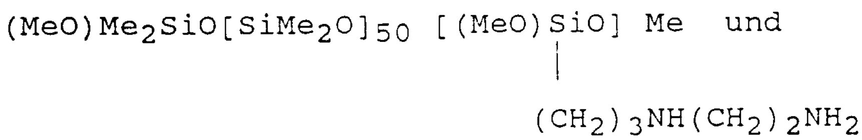

und

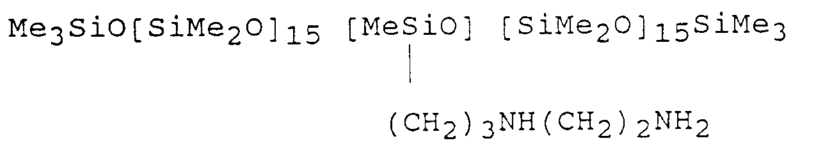

,

wobei

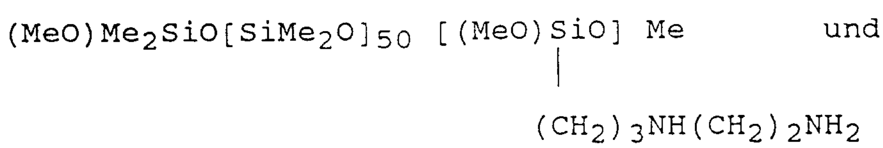

und

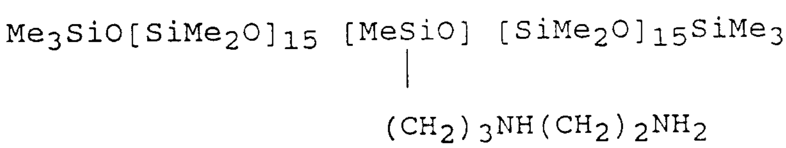

bevorzugt und

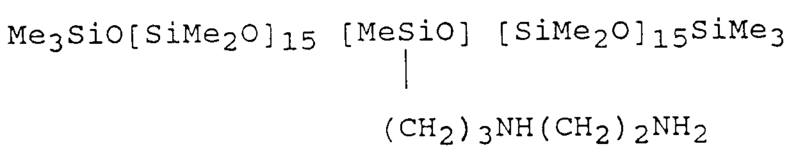

besonders bevorzugt sind.

Verfahren zur Herstellung von Organopolysiloxanen aus Einheiten der Formel (I) sind allgemein bekannt. Hierzu sei beispielsweise auf D. Werf, Silicone - Chemie und Technologie, Vulkan-Verlag Essen, 1. Aufl., 1989, Seite 89 ff, W. Noll, "Chemie und Technologie der Silicone", Verlag Chemie, Weinheim, 2. Aufl., 1968, Seite 178 ff und die oben erwähnte DE 34 47 636 A verwiesen.

Die wasserlöslichen organischen oder anorganischen Säuren, die zur Herstellung von Bestandteil A der erfindungsgemäßen Zusammensetzung verwendet werden, können die gleichen sein, die auch bisher zur Herstellung von Salzen von wasserlöslicher organischer oder anorganischer Säure und Organopolysiloxan mit basischem Stickstoff aufweisenden, SiC-gebundenen Resten eingesetzt werden konnten.

Beispiele für derartige wasserlösliche Säuren sind Ameisensäure, Essigsäure, Propionsäure, Buttersäure, Diethylhydrogenphosphat, HCl, $H_2SO_4$ und $H_3PO_4$, wobei Essigsäure und $H_2SO_4$ besonders bevorzugt sind, insbesondere Essigsäure.

Die wasserunlöslichen organischen Säuren, die zur Herstellung des Bestandteils (C) der erfindungsgemäßen Zusammensetzung verwendet werden, können ebenfalls die gleichen sein, die auch bisher zur

Herstellung von Salzen von Organopolysiloxanen mit basischem Stickstoff aufweisenden, SiC-gebundenen Resten eingesetzt werden konnten. Beispiele für derartige wasserunlösliche Säuren sind Ölsäure, Palmitinsäure und Stearinsäure, wobei Ölsäure besonders bevorzugt ist.

Die erfindungsgemäße Zusammensetzung enthält Bestandteil (C) in Mengen von vorzugsweise 0 bis 250 Gewichtsprozent, besonders bevorzugt 0 bis 125 Gewichtsprozent, jeweils bezogen auf das Gesamtgewicht an Bestandteil (A).

Bei dem Bestandteil (B) der erfindungsgemäßen Zusammensetzung handelt es sich vorzugsweise um alkoxylierten Alkohol auf der Basis gesättigter Alkohole mit vorzugsweise 2 bis 18 Kohlenstoffatomen, besonders bevorzugt mit 4 bis 14 Kohlenstoffatomen, und mit vorzugsweise 1 bis 20 Ethylen- und/oder Propylenoxideinheiten, besonders bevorzugt mit 1 bis 12 Ethylen- und/oder Propylenoxideinheiten.

Beispiele für den Bestandteil (B) sind 2-Butoxyethanol und Fettalkoholpolyglycolether auf Isotridecylalkohol-Basis mit 6 bis 15 Ethylenoxideinheiten.

Die erfindungsgemäße Zusammensetzung enthält Bestandteil (B) in Mengen von vorzugsweise 0,1 bis 200 Gewichtsprozent, besonders bevorzugt 25 bis 150 Gewichtsprozent, jeweils bezogen auf das Gesamtgewicht an Bestandteil (A).

Zusätzlich zu den Bestandteilen (A), (B) und gegebenenfalls (C) können die erfindungsgemäßen Zusammensetzungen noch weitere Stoffe, wie beispielsweise quartäre Ammoniumverbindungen (D) und cyclische Diorganopolysiloxane (E), enthalten.

Vorzugsweise handelt es sich bei den quartären Ammoniumverbindungen (D) um solche der allgemeinen Formel

$R^4{}_4N^+(X^-)_v$ (III),

worin $R^4$ gleich oder verschieden sein kann und einen einwertigen organischen Rest bedeutet, X die Bedeutung von einem Anion, wie Halogenid-, Sulfat-, Phosphat-, Nitrat-, Acetat-, Oleat- und Carboxylation, hat und v gleich dem reziproken Wert der Wertigkeit des Anions ist.

Vorzugsweise handelt es sich bei Rest $R^4$ um einen Kohlenwasserstoffrest mit 1 bis 20 Kohlenstoffatom(en), wobei Methylrest und Kohlenwasserstoffreste mit 8 bis 18 Kohlenstoffatomen besonders bevorzugt sind.

Beispiele für Rest $R^4$ sind die für Rest R angegebenen Beispiele sowie Cocosalkyl-, Dicocosalkyl- und Ditalgfettalkylreste, wobei unter Cocosalkylrest eine Mischung aus Kohlenwasserstoffresten mit 10 bis 18 Kohlenstoffatomen zu verstehen ist.

Bei X handelt es sich vorzugsweise um Acetat-, Oleat und Halogenidrest, wobei der Chloridrest besonders bevorzugt ist.

Beispiele für den gegebenenfalls eingesetzten Bestandteil (D) sind Dicocosalkyldimethylammoniumchlorid, Ditalgfettalkyldimethylammoniumchlorid und Cocosalkyldimethylbenzylammoniumchlorid, wobei Ditalgfettalkyldimethylammoniumchlorid und Cocosalkyldimethylbenzylammoniumchlorid, bevorzugt und Cocosalkyldimethylbenzylammoniumchlorid besonders bevorzugt sind.

Die erfindungsgemäße Zusammensetzung enthält Bestandteil (D) in Mengen von vorzugsweise 0 bis 100 Gewichtsprozent, besonders bevorzugt 25 bis 75 Gewichtsprozent, jeweils bezogen auf das Gesamtgewicht an Bestandteil (A).

Vorzugsweise handelt es sich bei den cyclischen Organopolysiloxanen (E) um solche der Formel

$(R^5{}_2SiO)_t$ (IV),

wobei $R^5$ gleich oder verschieden sein kann und eine für R angegebene Bedeutung hat und t eine Zahl von 3 bis 7 ist.

Bei Rest $R^5$ handelt es sich bevorzugt um Methyl-, Ethyl- und Ethoxyrest, wobei der Methylrest besonders bevorzugt ist.

Der Wert für t ist bevorzugt 4, 5 oder 6, wobei t besonders bevorzugt 4 oder 5 ist.

Beispiele für Bestandteil (E) sind Hexamethylcyclotrisiloxan, Octamethylcyclotetrasiloxan und Decamethylcyclopentasiloxan, wobei Octamethylcyclotetrasiloxan und Decamethylcyclopentasiloxan besonders bevorzugt sind.

Die erfindungsgemäße Zusammensetzung enthält Bestandteil (E) in Mengen von vorzugsweise 0 bis 75 Gewichtsprozent, besonders bevorzugt 0 bis 50 Gewichtsprozent, jeweils bezogen auf das Gesamtgewicht an Bestandteil (A).

Die erfindungsgemäßen Zusammensetzungen werden durch Vermischen von Organopolysiloxan, welches mindestens einen SiC-gebundenen Rest mit basischem Stickstoff aufweist, mit wasserlöslicher

organischer oder anorganischer Saure zur Bildung des Bestandteils (A) , gegebenenfalls mit wasserunlöslicher organischer Säure zur Bildung des Bestandteils (C) und mit Bestandteil (B) sowie gegebenenfalls weiteren Komponenten hergestellt. Das Vermischen wird dabei bei einer Temperatur von vorzugsweise 10 bis 40 °C, besonders bevorzugt 15 bis 25 °C, und einem Druck von vorzugsweise 900 bis 1100 hPa durchgeführt. Das Vermischen kann jedoch auch bei höheren oder niedrigeren Drücken durchgeführt werden.

Die erfindungsgemäßen Zusammensetzungen sind mit Wasser in allen Verhältnissen verdünnbar. Die erfindungsgemäßen Zusammensetzungen können Wasser in Mengen von vorzugsweise 0 bis 70 Gewichtsprozent, besonders bevorzugt 10 bis 65 Gewichtsprozent, jeweils bezogen auf das Gesamtgewicht an Bestandteil (A), enthalten.

Die erfindungsgemäße Zusammensetzung ist - unabhängig vom Wasseranteil - eine klare bis leicht opake Flüssigkeit mit einer Viskosität bei 25 °C von vorzugsweise 5 bis 5000 cSt (5 bis 5000 $mm^2/s$), besonders bevorzugt 10 bis 1000 cSt (10 bis 1000 $mm^2/s$), insbesondere 40 bis 100 cSt (40 bis 100 $mm^2/s$).

Die erfindungsgemäßen Zusammensetzungen, die Wasser enthalten, haben den Vorteil, daß sie sehr stabil sind und selbst bei einem Temperaturwechsel von +40 °C auf 0 °C im 6-Stunden-Rhythmus in einem Beobachtungszeitraum von mehr als 30 Tagen keine Phasentrennung zu beobachten ist und keinerlei Aktivitätsänderungen des Wirkstoffs auftreten.

Die erfindungsgemäßen Zusammensetzungen eignen sich ausgezeichnet als Mittel zum Wasserabweisendmachen in oder auf Gasbeton, als Zusatz für Gips, Verputze und mit Wasser verdünnbare Anstrichfarben, um diese Stoffe wasserabweisend zu machen, allgemein als Mittel zum Wasserabweisend- und gegebenenfalls Plakat- abweisendmachen von Baustoffen, einschließlich Fassaden, Straßen und Brücken, als Mittel die zur Sperrung von aufsteigender Mauerfeuchtigkeit durch Löcher in die Mauer eingebracht werden, oder als Mittel zur Sperrung von anderer unerwünschter Wasserwanderung.

Des weiteren eignen sich die erfindungsgemäßen Zusammensetzungen sehr gut zur Imprägnierung von feinteiligen anorganischen Stoffen, wie Perlit, Vermiculit oder Füllstoffen, als Mittel zum Hydrophobieren von Metallen, organischen Fasern, wie Textilien, Leder, Papier oder Wärmedämmstoffen, als Zusätze für Polituren als Dispergiermittel bzw. als Zusätze bei der Polymerisation von aliphatische Kohlenstoff-Kohlenstoff-Doppelbindung enthaltenden Monomeren, wie Vinylchlorid oder Vinylacetat, und als Verlaufverbesserungsmittel in mit Wasser verdünnbaren Lacken.

Die erfindungsgemäßen Zusammensetzungen können dabei zum Beispiel durch Sprühen, Streichen oder Tauchen auf das zu behandelnde Substrat aufgebracht werden.

Darüberhinaus können die erfindungsgemäßen Zusammensetzungen für alle Anwendungen eingesetzt werden, bei denen auch bisher Organosiliciumverbindungen in mit Wasser verdünnbarer Form verwendet wurden.

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur, also bei etwa 23 °C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

**Beispiel 1**

Aminosiloxan I

400 g $\alpha,\omega$-Dihydroxydimethylpolysiloxan mit einer Viskosität von ca. 40 $mm^2/s$ werden mit 80 g N-(2-Aminoethyl)-3-aminopropyltrimethoxysilan (käuflich erhältlich unter der Bezeichnung "GF 91" bei der Wacker-Chemie GmbH) und 50 g Trimethoxymethylsilan vermischt, unter ständigem Rühren und unter Rückfluß auf 95 °C erhitzt und 4 Stunden bei dieser Temperatur gehalten. Anschließend werden bei 95 °C eine Stunde lang die leichtflüchtigen Bestandteile ausdestilliert. Es wird ein klares, aminofunktionelles Siloxan mit einer Viskosität von 50 $mm^2/s$ und einer Aminzahl (= Anzahl der ml 1-n-HCl, die zum Neutralisieren von 1 g Substanz erforderlich sind) von 1,4 erhalten.

40 Teile des oben beschriebenen Aminosiloxans I, 3 Teile Essigsäure (99,8%ig in Wasser), 7 Teile Ölsäure, 25 Teile Butylglykol und 25 Teile Cocosalkyldimethylbenzylammoniumchlorid (käuflich erhältlich unter der Bezeichnung "Dodigen 226" der Hoechst AG) werden unter ständigem Rühren vermischt. Es wird eine gelblich klare Mischung mit einer Viskosität von ca. 100 $mm^2/s$ erhalten.

**Beispiel 2**

Aminosiloxan II

400 g $\alpha,\omega$-Trimethylsiloxydimethylpolysiloxan mit einer Viskosität von 250 $mm^2/s$ werden mit 0,5 g einer 20 %igen KOH-Lösung in Methanol vorgelegt, unter ständigem Rühren auf 110 °C aufgeheizt und eine Stunde bei dieser Temperatur gehalten. Anschließend werden innerhalb von 30 Minuten 70 g N-(2-Aminoethyl)3-aminopropyltrimethoxysilan (käuflich erhältlich unter der Bezeichnung "GF 91" bei der Wakker-Chemie GmbH) zugetropft und 2 Stunden bei dieser Temperatur gerührt. Nach dem Abkühlen auf 50 °C werden 0,5 g wäßrige HCl-Lösung (18%ig) zugegeben und das Produkt bei einer Temperatur von 160 °C und einem Druck von 1000 hPa ausdestilliert. Nach dem Abkühlen wird das Produkt mit 5 g Aktivkohle vermischt und anschließend filtriert. Es wird ein klares, aminofunktionelles Siloxan mit einer Viskosität von 20 $mm^2/s$ und einer Aminzahl (= Anzahl der ml 1-n-HCl, die zum Neutralisieren von 1 g Substanz erforderlich sind) von 1,2 erhalten.

36 Teile des oben beschriebenen Aminosiloxans II, 2 Teile Essigsäure (99,8%ig in Wasser), 6 Teile Ölsäure, 23 Teile Butylglykol, 10 Teile Isotridecylethoxylat mit ca. 10 Ethylenoxideinheiten und 23 Teile Cocosalkyldimethylbenzylammoniumchlorid (käuflich erhältlich unter der Bezeichnung "Dodigen 226" bei der Hoechst AG) werden unter ständigem Rühren vermischt. Es wird eine gelblich klare Mischung mit einer Viskosität von ca. 70 $mm^2/s$ erhalten.

1 Teil der so erhaltenen Organopolysiloxanzusammensetzung wird nun mit 100 Teilen Wasser vermischt. In diese Verdünnung werden Gasbeton-Steine für eine Dauer von 60 Sekunden getaucht und anschließend 14 Tage bei Raumtemperatur getrocknet. Die kapillare Wasseraufnahme der so behandelten Gasbeton-Steine sowie zum Vergleich der unbehandelten Gasbeton-Steine wird über einen Zeitraum von 7 Stunden in einem Wasserbad ermittelt, wobei die Steine jeweils völlig mit Wasser bedeckt sind. Angaben über die Wasseraufnahme in %, jeweils bezogen auf das Gewicht an Gasbeton in Abhängigkeit von der Zeit im Wasserbad finden sich in Tabelle 1.

Tabelle 1

| Gasbeton-Steine | 1 [h] | 2 [h] | 3 [h] | 5 [h] | 7 [h] |
|---|---|---|---|---|---|
| mit der erfindungsgemäßen Verdünnung behandelt | 2,65 % | 4,62 % | 6,41 % | 9,86 % | 13,50 % |
| unbehandelt | 30,70 % | 36,10 % | 39,80 % | 45,70 % | 51,20 % |

**Patentansprüche**

1. Organopolysiloxanzusammensetzungen, die (A) ein Salz aus einer wasserlöslichen organischen oder anorganischen Säure und einem Organopolysiloxan, welches mindestens einen SiC-gebundenen organischen Rest mit basischem Stickstoff aufweist, (B) einen alkoxylierten Alkohol, gegebenenfalls (C) ein Salz aus einer wasserunlöslichen organischen Säure und ein Organopolysiloxan, welches mindestens einen SiC-gebundenen organischen Rest mit basischem Stickstoff aufweist, enthalten, wobei kein Silan oder Siloxan, das pro Molekül mehr als zwei Silanolgruppen oder an Silicium gebundene hydrolysierbare Gruppen aufweist und in Glykolethern der Formel $C_4H_9$-O-($CH_2$-$CH_2$-O)$_n$-H, wobei n 1 oder 2 ist, löslich ist, enthalten ist.

2. Organopolysiloxanzusammensetzungen gemäß Anspruch 1, dadurch gekennzeichnet, daß es sich bei den Organopolysiloxanen, welche mindestens einen SiC-gebundenen organischen Rest mit basischem Stickstoff aufweisen, um solche aus Einheiten der allgemeinen Formel

$$R_aY_bSi(OR^1)_cO_{\frac{4-a-b-c}{2}} \quad (I),$$

worin

R gleich oder verschieden sein kann und Wasserstoffatom oder einen einwertigen, von basischem Stickstoff freien organischen Rest bedeutet,
$R^1$ gleich oder verschieden sein kann und Wasserstoffatom oder einen Alkylrest bedeutet,
Y gleich oder verschieden sein kann und einen einwertigen, SiC-gebundenen Rest mit basischem Stickstoff bedeutet,
a 0, 1, 2 oder 3,
b 0, 1 oder 2 und
c 0, 1 oder 2 ist,

mit der Maßgabe, daß die Summe aus a, b und c in den Einheiten der Formel (I) kleiner oder gleich 3 ist und pro Molekül mindestens ein Rest Y anwesend ist, handelt.

**3.** Organopolysiloxanzusammensetzungen gemäß Anspruch 2, dadurch gekennzeichnet, daß Y ein Rest der Formel

$R^2_2NR^3-$ (II)

ist, worin $R^2$ gleich oder verschieden sein kann und Wasserstoff, Alkyl-, Gycloalkyl- oder Aminoalkylreste bedeutet und $R^3$ gleiche oder verschiedene, zweiwertige Kohlenwasserstoffreste bedeutet.

**4.** Organopolysiloxanzusammensetzungen gemäß Anspruch 2 oder 3, dadurch gekennzeichnet, daß die Organopolysiloxane aus Einheiten der allgemeinen Formel (I) bei 25 °C eine Viskosität von 5 bis 5000 cSt (5 bis 5000 $mm^2/s$) haben.

**5.** Organopolysiloxanzusammensetzungen gemäß einem oder mehreren der Ansprüche 1 bis 4, dadurch gekennzeichnet, daß Bestandteil (C) in Mengen von 0 bis 250 Gewichtsprozent, bezogen auf das Gesamtgewicht an Bestandteil (A), enthalten ist.

**6.** Organopolysiloxanzusammensetzungen gemäß einem oder mehreren der Ansprüche 1 bis 5, dadurch gekennzeichnet, daß Bestandteil (B) in Mengen von 0,1 bis 200 Gewichtsprozent, bezogen auf das Gesamtgewicht an Bestandteil (A), enthalten ist.

**7.** Organopolysiloxanzusammensetzungen gemäß einem oder mehreren der Ansprüche 1 bis 6, dadurch gekennzeichnet, daß weitere Stoffe, ausgewählt aus der Gruppe bestehend aus quartären Ammoniumverbindungen (D) und cyclischen Diorganopolysiloxanen (E) enthalten sind.

**8.** Organopolysiloxanzusammensetzungen gemäß einem oder mehreren der Ansprüche 1 bis 7, dadurch gekennzeichnet, daß es sich bei den quartären Ammoniumverbindungen (D) um solche der allgemeinen Formel

$R^4_4N^+(X^-)_v$ (III)

handelt, worin $R^4$ gleich oder verschieden sein kann und einen einwertigen organischen Rest bedeutet, X die Bedeutung von einem Anion, wie Halogenid-, Sulfat-, Oleat-, Acetat-, Phosphat-, Nitrat- und Carboxylation, hat und v gleich dem reziproken Wert der Wertigkeit des Anions ist.

**9.** Organopolysiloxanzusammensetzungen gemäß einem oder mehreren der Ansprüche 1 bis 8, dadurch gekennzeichnet, daß sie Wasser in Mengen von 0 bis 70 Gewichtsprozent, bezogen auf das Gesamtgewicht an Bestandteil (A), enthalten.

## Claims

**1.** Organopolysiloxane compositions which comprise
(A) a salt of a water-soluble organic or inorganic acid and an organopolysiloxane, which has at least one SiC-bonded organic radical containing basic nitrogen,
(B) an alkoxylated alcohol, optionally,
(C) a salt of a water-insoluble organic acid and an organopolysiloxane, which has at least one SiC-bonded organic radical containing basic nitrogen, where no silane or siloxane which has per molecule more than two silanol groups or hydrolysable groups bonded to silicon and is soluble in

glycol ethers of the formula $C_4H_9-O-(CH_2-CH_2-O)_n-H$ where n is 1 or 2 is present.

2. Organopolysiloxane compositions according to Claim 1, characterized in that the organopolysiloxanes, which have at least one SiC-bonded organic radical containing basic nitrogen, are those composed of units of the general formula

$$R_aY_bSi(OR^1)_cO_{\frac{4-a-b-c}{2}} \qquad (I)$$

in which

R can be identical or different and denotes a hydrogen atom or a monovalent organic radical free from basic nitrogen,

$R^1$ can be identical or different and denotes a hydrogen atom or an alkyl radical,

Y can be identical or different and denotes a monovalent, SiC-bonded radical containing basic nitrogen,

a is 0, 1, 2 or 3,

b is 0, 1 or 2 and

c is 0, 1 or 2,

with the proviso that the sum of a, b and c in the units of the formula (I) is less than or equal to 3 and that at least one radical Y is present per molecule.

3. Organopolysiloxane compositions according to Claim 2, characterized in that Y is a radical of the formula

$R^2_2NR^3-$ (II)

in which $R^2$ can be identical or different and denotes hydrogen or alkyl, cycloalkyl or aminoalkyl radicals and $R^3$ denotes identical or different divalent hydrocarbon radicals.

4. Organopolysiloxane compositions according to Claim 2 or 3, characterized in that the organopolysiloxanes composed of units of the general formula (I) have a viscosity of 5 to 5000 cSt (5 to 5000 $mm^2/s$) at 25 °C.

5. Organopolysiloxane compositions according to one or more of Claims 1 to 4, characterized in that constituent (C) is present in amounts of 0 to 250 percent by weight, with respect to the total weight of constituent (A).

6. Organopolysiloxane compositions according to one or more of Claims 1 to 5, characterized in that constituent (B) is present in amounts of 0.1 to 200 percent by weight, with respect to the total weight of constituent (A).

7. Organopolysiloxane compositions according to one or more of Claims 1 to 6, characterized in that further substances, selected from the group consisting of quaternary ammonium compounds (D) and cyclic diorganopolysiloxanes (E), are present.

8. Organopolysiloxane compositions according to one or more of Claims 1 to 7, characterized in that the quaternary ammonium compounds (D) are those of the general formula

$R^4_4N^+(X^-)_v$ (III)

in which each $R^4$ can be identical or different and denotes a monovalent organic radical, X denotes an anion, such as a halide, sulphate, oleate, acetate, phosphate, nitrate or carboxylate ion, and v is equal to the reciprocal value of the valency of the anion.

**9.** Organopolysiloxane compositions according to one or more of Claims 1 to 8, characterized in that they contain water in amounts of 0 to 70 percent by weight, with respect to the total weight of constituent (A).

## Revendications

**1.** Compositions d'organopolysiloxanes qui comportent
(A). un sel d'un acide organique ou inorganique soluble dans l'eau et d'un organopolysiloxane, qui comporte au moins un radical organique lié par SiC avec de l'azote basique,
(B). un alcool alcoxylé, éventuellement
(C). un sel d'un acide organique insoluble dans l'eau, et un organopolysiloxane qui comporte au moins un radical organique lié par SiC, avec de l'azote basique, ces compositions ne comportant aucun silane ou siloxane qui comporte par molécule plus de deux groupes silanol ou groupes hydrolysables liés au silicium et qui est soluble dans les glycoléthers de formule $C_4H_9$-O-($CH_2$-$CH_2$-O)n-H, où n est 1 ou 2.

**2.** Compositions d'organopolysiloxanes selon la revendication 1, caractérisées en ce que, pour les organopolysiloxanes qui comportent au moins un radical organique lié par SiC, avec de l'azote basique, il s'agit de ceux constitués d'unités de formule générale

$$R_aY_bSi(OR^1)_cO_{\frac{4-a-b-c}{2}} \qquad (I),$$

dans laquelle
R peut être identique ou différent et représente un atome d'hydrogène, ou un radical organique monovalent, dépourvu d'azote basique,
$R^1$ peut être identique ou différent et représente un atome d'hydrogène ou un radical alkyle,
Y peut être identique ou différent et représente un radical monovalent lié par SiC avec de l'azote basique,
a est 0, 1, 2 ou 3,
b est 0, 1 ou 2, et
c est 0, 1 ou 2,
à la condition que la somme de a, b et c dans les unités de formule (I) soit inférieure ou égale à 3 et qu'il y ait par molécule au moins un radical Y.

**3.** Compositions d'organopolysiloxanes selon la revendication 2, caractérisées en ce que Y est un radical de formule

$$R^2_2NR^3- \qquad (II)$$

où $R^2$ peut être identique ou différent et représente l'hydrogène, des radicaux alkyle, cycloalkyle ou aminoalkyle, et $R^3$ représente des radicaux hydrocarbonés bivalents identiques ou différents.

**4.** Compositions d'organopolysiloxanes selon la revendication 2 ou 3, caractérisées en ce que les organopolysiloxanes, constitués d'unités de formule générale (I), ont, à 25 °C, une viscosité de 5 à 5000 cSt (de 5 à 5000 mm2/s).

**5.** Compositions d'organopolysiloxanes selon une ou plusieurs des revendications 1 à 4, caractérisées en ce que le constituant (C) est contenu dans des quantités de 0 à 250 % en poids, rapportés au poids total du constituant (A).

**6.** Compositions d'organopolysiloxanes selon une ou plusieurs des revendications 1 à 5, caractérisées en ce que le constituant (B) est contenu dans des quantités de 0,1 à 200 % en poids, rapportés au poids total du constituant (A).

**7.** Compositions d'organopolysiloxanes selon une ou plusieurs des revendications 1 à 6, caractérisées en ce qu'elles comportent d'autres matières choisies dans le groupe constitué par les composés d'ammonium quaternaire (D) et les diorganopolysiloxanes cycliques (E).

**8.** Compositions d'organopolysiloxanes selon une ou plusieurs des revendications 1 à 7, caractérisées en ce que, pour les composés d'ammonium quaternaire (D), il s'agit de ceux de formule générale

$$R^4{}_4N^+(X^-)_v \qquad (III)$$

dans laquelle $R^4$ peut être identique ou différent et représente un radical organique monovalent, X a la signification d'un anion, comme un ion halogénure, sulfate, phosphate, nitrate, acétate, oléate et carboxylate, et v est égal à la valeur réciproque de la valence de l'anion.

**9.** Compositions d'organopolysiloxanes selon une ou plusieurs des revendications 1 à 8, caractérisées en ce qu'elles contiennent de l'eau dans des quantités de 0 à 70 % en poids, rapportés au poids total du constituant (A).